# EUROPÄISCHE PATENTSCHRIFT

(11) **EP 2 313 764 B1**
(45) Veröffentlichungstag und Bekanntmachung des Hinweises auf die Patenterteilung: **08.08.2018**
(21) Anmeldenummer: 09779696.5
(22) Anmeldetag: 10.06.2009
(51) Int. Cl.: G01N 27/407

(54) **ABGASSENSOR**
EXHAUST GAS SENSOR
CAPTEUR DE GAZ D'ÉCHAPPEMENT

(30) Priorität: 06.08.2008 DE 102008041046
(43) Veröffentlichungstag der Anmeldung: 27.04.2011
(73) Patentinhaber: Robert Bosch GmbH, 70442 Stuttgart (DE)
(72) Erfinder: HARZER, Olav, 70374 Stuttgart (DE); HEINZELMANN, Stefan, 71394 Kernen (DE); MICHAELIS, Burkhard, 71665 Vaihingen/Enz (DE); BAUNACH, Thorsten, 72119 Ammerbuch (DE); GRABIS, Johannes, 71272 Renningen (DE); HETZNECKER, Alexander, 76275 Ettlingen (DE); ZIMMERMANN, Christoph, 72461 Albstadt (DE); SCHMIDT,Ralf, 70839 Gerlingen (DE); SCHITTENHELM, Henrik, 70182 Stuttgart (DE); HOLZKNECHT, Christopher, 70186 Stuttgart (DE); KOBLMILLER, Saskia, 70469 Stuttgart (DE)
(86) Internationale Anmeldenummer: PCT/EP2009/057131
(87) Internationale Veröffentlichungsnummer: WO 2010/015445

(56) Entgegenhaltungen:
- EP-A- 1 236 998
- EP-A- 1 471 346
- EP-A1- 1 494 023
- WO-A1-98/03861
- DE-A1- 19 628 423
- DE-A1-102006 060 312
- DE-A1-102007 000 245
- US-A1- 2004 035 700

## Beschreibung

### Stand der Technik

Die Erfindung geht aus von einem Abgassensor nach der Gattung des Hauptanspruchs.

Es ist schon ein Abgassensor aus der EP 1471346 A1 bekannt, mit einem Sensorelement, das in einem Durchgangskanal eines ersten Gehäuseabschnitts gelagert ist, mit einem abgasseitigen Abschnitt aus dem Durchgangskanal vorsteht und an diesem abgasseitigen Abschnitt des Sensorelementes von einem äußeren Schutzrohr und einem inneren Schutzrohr umgeben ist, wobei zwischen dem äußeren Schutzrohr und dem inneren Schutzrohr ein Ringspalt gebildet ist und wobei das innere Schutzrohr eine Schulter aufweist. Nachteilig ist, dass das Sensorelement mit einem vergleichsweise langen Abschnitt abgasseitig aus dem Durchgangskanal herausragen muss, um ein ausreichendes dynamisches Ansprechverhalten des Abgassensors auf Änderungen im Abgas zu erhalten.

Weitere artverwandte Abgassensoren sind aus DE19628423 sowie EP1494023 bekannt.

### Vorteile der Erfindung

Der erfindungsgemäße Abgassensor betrifft einen Abgassensor entsprechend dem unabhängigen Anspruch 1. Er hat den Vorteil, dass der Abgassensor nur mit einem kurzen Abschnitt abgasseitig aus dem Durchgangskanal vorzustehen braucht und trotzdem noch ein ausreichendes dynamisches Ansprechverhalten aufweist. Dies wird erfindungsgemäß erreicht, indem die Schulter zumindest eine Durchgangsöffnung aufweist und der Ringspalt über die Durchgangsöffnung des inneren Schutzrohrs unmittelbar in den Durchgangskanal mündet. Das Abgas aus dem Ringspalt wird auf diese Weise zunächst in den Durchgangskanal geleitet und dort umgelenkt. Auf diese Weise wird ein Teil des Durchgangskanals für die Strömungsumlenkung und -gleichrichtung genutzt. Durch das Verkürzen des Sensorelementes gegenüber dem Stand der Technik verringern sich die Herstellungskosten für das Sensorelement. Selbst wenn das Sensorelement nicht verkürzt ist, wird mit der erfindungsgemäßen Ausführung eine maximale Strömungsstrecke zur Gleichrichtung und Beruhigung der Strömung zur Verfügung gestellt, was für Partikelsensoren von hoher Bedeutung ist, um eine reproduzierbare Partikelanlagerung am Sensorelement zu erreichen.

Durch die in den Unteransprüchen aufgeführten Maßnahmen sind vorteilhafte Weiterbildungen und Verbesserungen des im Hauptanspruch angegebenen Abgassensors möglich. Der Ringspalt mündet erfindungsgemäß in den abgasseitigen Ausgang des Durchgangskanals. Im Durchgangskanal ist eine Halterung für das Sensorelement vorgesehen, die an einer Schulter des Durchgangskanals abgestützt ist, wobei der Ringspalt beispielsweise in den Durchgangskanal mündet im Bereich zwischen der Schulter und seinem abgasseitigen Ende. Das in den Durchgangskanal geleitete Abgas wird im Durchgangskanal umgelenkt und strömt in Richtung des Sensorelementes und strömt an diesem vorbei. Durch diese Ausführung kann das Sensorelement verkürzt werden.

Weiterhin vorteilhaft ist, wenn der Durchgangskanal im Bereich der Durchgangsöffnung des inneren Schutzrohrs eine strömungsverbindende Ausnehmung aufweist, da das Abgas auf diese Weise über die Ausnehmung unmittelbar in den Durchgangskanal mündet.

Sehr vorteilhaft ist es, wenn die Ausnehmung durch eine Erweiterung des Durchgangskanals gebildet ist, da diese Ausführung besonders einfach herzustellen ist. Die Erweiterung des Durchgangskanals kann sowohl stufenförmig als auch kontinuierlich sein.

Desweiteren vorteilhaft ist, wenn das Sensorelement an seinem abgasseitigen Ende einen sensitiven Abschnitt aufweist, der im Bereich des Ausgangs des Durchgangskanals angeordnet ist, da das Sensorelement auf diese Weise besonders kurz ausführbar ist.

Gemäß einem vorteilhafthaften Ausführungsbeispiel weist das äußere Schutzrohr zwei durchmesserverschiedene Schutzrohrabschnitte auf, wobei der durchmessergrößere Schutzrohrabschnitt eine Länge L1 und der durchmesserkleinere Schutzrohrabschnitt eine Länge L2 aufweist. Das Verhältnis von L1 zu L2 liegt beispielsweise im Bereich zwischen 1,2 und 2.

### Zeichnung

Zwei Ausführungsbeispiele der Erfindung sind in der Zeichnung vereinfacht dargestellt und in der nachfolgenden Beschreibung näher erläutert.
- Fig.1: zeigt ein erstes Ausführungsbeispiel und
- Fig.2: ein zweites Ausführungsbeispiel eines erfindungsgemäßen Abgassensors.

### Beschreibung der Ausführungsbeispiele

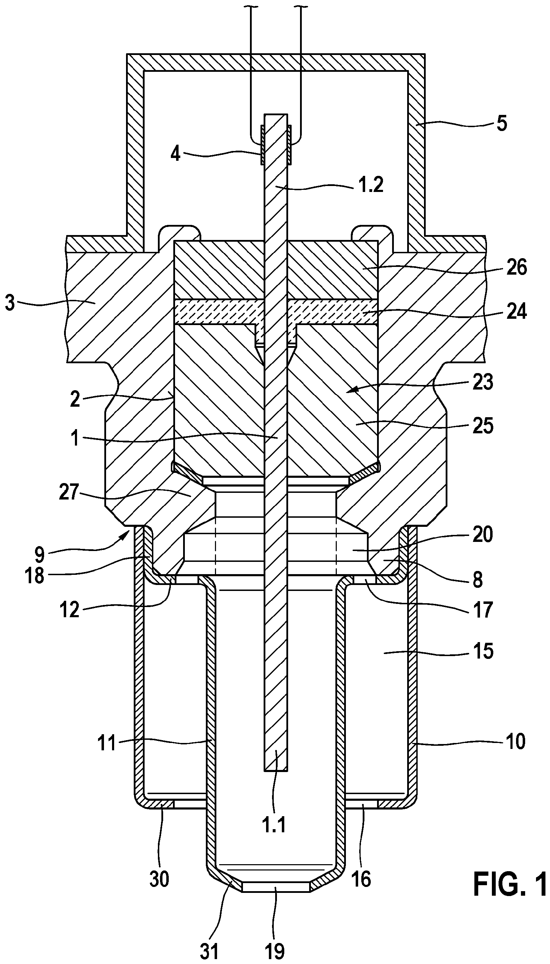

Fig.1 zeigt einen Abgassensor gemäß einem ersten Ausführungsbeispiel, das beispielsweise für einen Partikelsensor zur Bestimmung der Partikelkonzentration in einem Abgas der Brennkraftmaschine geeignet ist.

Der Abgassensor nach Fig.1 kann aber auch eine Lambdasonde zur Bestimmung der Sauerstoffkonzentration sein oder auch zur Bestimmung anderer physikalischer Größen eines beliebigen Gases verwendet werden.

Der Abgassensor hat ein Sensorelement 1, das in einem Durchgangskanal 2 eines ersten Gehäuseabschnitts 3 des Abgassensors gehalten ist. Das Sensorelement 1 erfasst die zu messende physikalische Größe des Abgases. Dazu ragt das Sensorelement 1 mit einem abgasseitigen Abschnitt 1.1 aus dem Durchgangskanal 2 in das Abgas einer Abgasleitung. An dem dem abgasseitigen Abschnitt 1.1 abgewandten Ende des Sensorelementes 1 ist ein anschlussseitiger Abschnitt 1.2 vorgesehen, der elektrische Anschlusskontakte 4 zur Ableitung der Messsignale des Sensorelementes 1 aufweist. Der aus dem Durchgangskanal 2 herausragende Abschnitt 1.2 des Sensorelementes 1 ist von einem zweiten Gehäuseabschnitt 5 umschlossen, der mit dem ersten Gehäuseabschnitt 3 fest verbunden ist. Das Sensorelement 1 hat außerdem einen dem Abgas ausgesetzten sensitiven Abschnitt 1.3, mittels dem die physikalische Größe bestimmbar und der beispielsweise durch Interdigitalelektroden gebildet ist.

Der abgasseitige Ausgang des Durchgangskanals 2 ist beispielsweise an einer Stirnseite 9 des ersten Gehäuseabschnitts 3 vorgesehen. Das aus dem Durchgangskanal 2 vorstehende Sensorelement 1 ist von einem äußeren Schutzrohr 10 und einem innerhalb des äußeren Schutzrohrs 10 angeordneten inneren Schutzrohr 11 umgeben. Die Schutzrohre 10,11 schützen das Sensorelement 1 wirksam vor im Abgas enthaltenen Schmutzpartikeln und vor Thermoschock durch im Abgas gebildetes Kondensat. Zumindest eines der beiden Schutzrohre 10,11 ist am ersten Gehäuseabschnitt 3 befestigt.

Das innere Schutzrohr 11 weist an seinem dem ersten Gehäuseabschnitt 3 zugewandten Ende eine Schulter 12 auf. Gemäß dem Ausführungsbeispiel verläuft die Schulter 12 des inneren Schutzrohres 11 bis an das äußere Schutzrohr 10 und ist mit diesem fest verbunden.

Zwischen dem Umfang des äußeren Schutzrohrs 10 und des inneren Schutzrohrs 11 ist ein radialer Ringspalt bzw. Zwischenraum 15 gebildet.

Erfindungsgemäß ist vorgesehen, dass die Schulter 12 des inneren Schutzrohrs 11 zumindest eine Durchgangsöffnung 17 aufweist und der Ringspalt 15 über die zumindest eine Durchgangsöffnung 17 des inneren Schutzrohrs 11 unmittelbar in den Durchgangskanal 2 des ersten Gehäuseabschnitts 3 mündet. Auf diese Weise wird eine maximale Strömungsstrecke zur Gleichrichtung und Beruhigung der Strömung zur Verfügung gestellt, was für Partikelsensoren von hoher Bedeutung ist, um eine reproduzierbare Partikelanlagerung an den sensitiven Abschnitt 1.3 des Sensorelementes zu erreichen.

Der Ringspalt 15 mündet in den abgasseitigen Ausgang des Durchgangskanals 2, wobei im Durchgangskanal 2 eine Halterung 23 für das Sensorelement 1 vorgesehen ist, die an einer Halteschulter 27 des Durchgangskanals 2 abgestützt ist und wobei der Ringspalt 15 in den Durchgangskanal 2 mündet im Bereich zwischen der Halteschulter 27 und dem abgasseitigen Ende des Durchgangskanals 2. Die Halterung 23 ist beispielsweise durch zwei Formkörper 25,26 und eine zwischen den Formkörpern 25,26 vorgesehene Pulverpackung 24 gebildet, kann aber auch eine beliebige andere Halterung, beispielsweise ein Glaskörper, sein.

Der Durchgangskanal 2 hat im Bereich der Durchgangsöffnung 17 des inneren Schutzrohrs 11 eine strömungsverbindende Ausnehmung 20, die gemäß den Ausführungsbeispielen durch eine endseitige Erweiterung des Durchgangskanals 2 gebildet ist. Die Ausnehmung 20 kann aber auch ein in den Durchgangskanal 2 mündender Strömungskanal sein. Die Erweiterung des Durchgangskanals 2 kann stufenförmig oder kontinuierlich sein, beispielsweise konisch.

Der erste Gehäuseabschnitt 3 weist am Ausgang des Durchgangskanals 2 einen Ringabsatz 8 auf, an dem die Schulter 12 des inneren Schutzrohrs 11 stirnseitig und/oder umfangsseitig anliegt. Anstatt anzuliegen kann die Schulter 12 auch nahe dem Ringabsatz 8 angeordnet sein. Die Schulter 12 des inneren Schutzrohres 11 ist derart ausgebildet, dass sie den Ringabsatz 8 umgreift bzw. umschließt und mit einem Ringkragen 18 am Umfang des Ringabsatzes 8 und am Innenumfang des äußeren Schutzrohres 10 anliegt.

Das Abgas gelangt über zumindest eine Einlassöffnung 16 in den Ringspalt 15 und wird über die zumindest eine Durchgangsöffnung 17 vom Ringspalt 15 in den vom inneren Schutzrohr 11 eingeschlossenen Raum zum Sensorelement 1 geleitet. Über zumindest eine Ausgangsöffnung 19 des inneren Schutzrohres 11 wird das Abgas aus dem vom inneren Schutzrohr 11 eingeschlossenen Raum zurück in die Abgasleitung geleitet.

Das beispielsweise zylinderförmige innere Schutzrohr 11 ragt mit seinem der Schulter 12 abgewandten Ende durch einen Boden 30 des äußeren Schutzrohres 10 aus dem äußeren Schutzrohr 10 heraus. Die zumindest eine Einlassöffnung 16 ist in dem Boden 30 des äußeren Schutzrohres 10 angeordnet. Das äußere Schutzrohr 10 ist beispielsweise zylinderförmig oder topfförmig ausgeführt. Die zumindest eine Auslassöffnung 19 ist in einem Boden 31 des inneren Schutzrohres 11 vorgesehen.

Das innere Schutzrohr 11 ist möglichst schlank und der Durchmesser des inneren Schutzrohres 11 entsprechend klein auszuführen, dass der Abstand zwischen dem inneren Schutzrohr 11 und dem Sensorelement 1 gering ist. Auf diese Weise wird die Strömungsgleichrichtung verbessert. Außerdem wird eine Wirbelbildung vermieden.

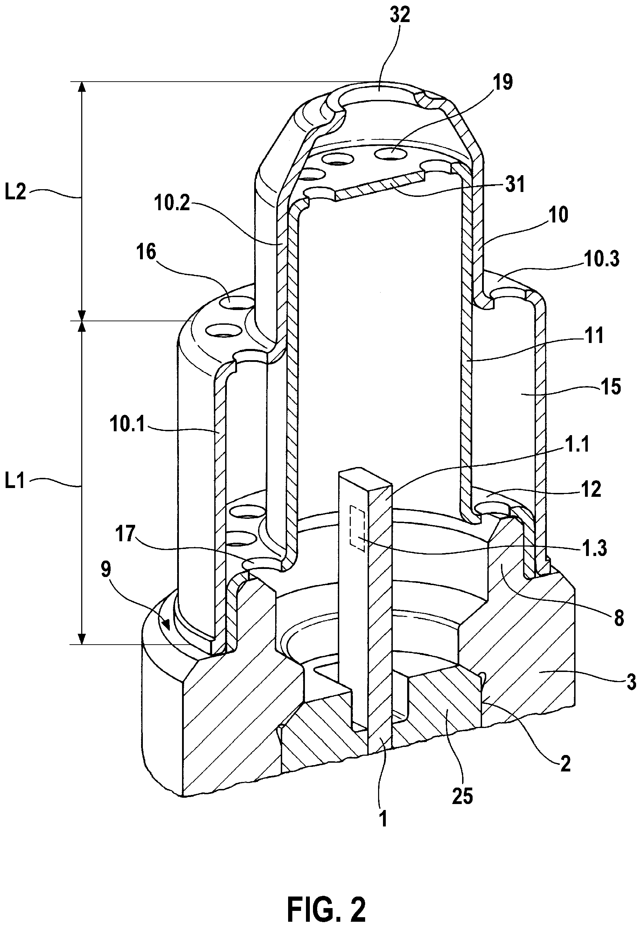

Fig.2 zeigt einen Abgassensor gemäß einem zweiten Ausführungsbeispiel.

Bei dem Abgassensor nach Fig.2 sind die gegenüber dem Abgassensor nach Fig.1 gleichbleibenden oder gleichwirkenden Teile durch die gleichen Bezugszeichen gekennzeichnet.

Der Abgassensor nach Fig.2 ist beispielsweise eine Lambdasonde zur Bestimmung der Sauerstoffkonzentration, kann aber auch ein Sensor zur Bestimmung anderer physikalischer Größen sein.

Das zweite Ausführungsbeispiel nach Fig.2 unterscheidet sich von dem ersten Ausführungsbeispiel nach Fig.1 darin, dass das Sensorelement 1 verkürzt ist. Auf diese Weise wird Material für das Sensorelement 1 eingespart, so dass die Herstellungskosten für das Sensorelement 1 sinken. Da die Schulter 12 des inneren Schutzrohrs 11 zumindest eine Durchgangsöffnung 17 aufweist und der Ringspalt 15 über die zumindest eine Durchgangsöffnung 17 des inneren Schutzrohrs 11 unmittelbar in den Durchgangskanal 2 des ersten Gehäuseabschnitts 3 mündet, wird ein Teil des Durchgangskanals 2 für die Strömungsumlenkung - und/oder beruhigung bzw. -gleichrichtung genutzt, was die Verkürzung des Sensorelementes 1 erlaubt.

Außerdem weist das äußere Schutzrohr 10 zwei durchmesserverschiedene Schutzrohrabschnitte 10.1,10.2 auf, wobei das innere Schutzrohr 11 mit seinem der Schulter 12 abgewandten Ende in den durchmesserkleineren Schutzrohrabschnitt 10.2 des äußeren Schutzrohres 10 hineinragt. An dem Boden 31 des inneren Schutzrohres 11 sind mehrere Ausgangsöffnungen 19 vorgesehen, die beispielsweise auf einem gedachten Ring angeordnet sind. Der durchmesserkleinere Schutzrohrabschnitt 10.2 des äußeren Schutzrohres 10 hat zumindest eine stirnseitige Ausgangsöffnung 32, die zu den Ausgangsöffnungen 19 des inneren Schutzrohres 11 in axialer Richtung beabstandet ist. Zwischen den durchmesserverschiedenen äußeren Schutzrohrabschnitten 10.1,10.2 ist ein Absatz 10.3 gebildet, in dem stirnseitig die zumindest eine Einlassöffnung 16 vorgesehen ist. Durch die axiale Position des Absatzes 10.3 wird die Druckdifferenz zwischen dem Einlass 16 und dem Auslass 19,32 und damit der Massenstrom durch die Schutzrohre 10,11 eingestellt. Eine hohe Druckdifferenz führt zu einer hohen Durchströmung der Schutzrohre 10,11 und damit zu einer schnellen Ansprechzeit des Sensorelementes auf beispielsweise Änderungen des Lambdawertes im Abgas.

Der durchmessergrößere Schutzrohrabschnitt 10.1 hat eine Länge L1 und der durchmesserkleinere Schutzrohrabschnitt eine Länge L2, wobei das Verhältnis von L1 zu L2 zwischen 1,2 und zwei liegt. Im Stand der Technik liegt das Verhältnis L1/L2 dagegen im Bereich von eins.

Durch das Absenken der schulterförmigen Absatzes 10.3 zum ersten Gehäuseabschnitt 3 hin wird eine Vergrößerung der Stauzone und somit eine verbesserte Durchströmung der Schutzrohre 10,11 erreicht. Außerdem wird das Mischungsvolumen im Zwischenraum 15 verringert, wodurch sich eine höhere Ansprechdynamik des Sensorelementes einstellt.

## Patentansprüche

1. Abgassensor mit einem Sensorelement (1), das in einem Durchgangskanal (2) eines ersten Gehäuseabschnitts (3) gelagert ist, mit einem abgasseitigen Abschnitt (1.1) aus dem Durchgangskanal (2) vorsteht und an diesem abgasseitigen Abschnitt (1.1) des Sensorelementes (1) von einem äußeren Schutzrohr (10) und einem inneren Schutzrohr (11) umgeben ist, wobei zwischen dem äußeren Schutzrohr (10) und dem inneren Schutzrohr (11) ein Ringspalt (15) gebildet ist und wobei das innere Schutzrohr (11) eine Schulter (12) aufweist, wobei der erste Gehäuseabschnitt (3) am abgasseitigen Ausgang des Durchgangskanals (2) einen Ringabsatz (8) aufweist, an dem die Schulter (12) des inneren Schutzrohrs (11) stirnseitig und umfangsseitig anliegt, sodass sie den Ringabsatz (8) umgreift und wobei das äußere Schutzrohr (10) an einem Ringkragen (18) der Schulter (12) des inneren Schutzrohrs (11) anliegt, sodass der Ringkragen (18) der Schulter (12) am Innenumfang des äußeren Schutzrohres (10) anliegt, **dadurch gekennzeichnet, dass** die Schulter (12) zumindest eine Durchgangsöffnung (17) aufweist und der Ringspalt (15) über die zumindest eine Durchgangsöffnung (17) in der Schulter (12) des inneren Schutzrohrs (11) in den abgasseitigen Ausgang des Durchgangskanals (2) mündet.

2. Abgassensor nach Anspruch 1, **dadurch gekennzeichnet, dass** im Durchgangskanal (2) eine Halterung (23) für das Sensorelement (1) vorgesehen ist, die an einer Halteschulter (27) des Durchgangskanals (2) abgestützt ist, wobei der Ringspalt (15) in den Durchgangskanal (2) mündet im Bereich zwischen der Halteschulter (27) und dem abgasseitigen Ende des Durchgangskanals (2).

3. Abgassensor nach Anspruch 2, **dadurch gekennzeichnet, dass** die Halterung (23) durch zwei Formkörper (25,26) und eine zwischen den Formkörpern (25,26) vorgesehene Pulverpackung (24) gebildet ist.

4. Abgassensor nach Anspruch 1, **dadurch gekennzeichnet, dass** der Durchgangskanal (2) im Bereich der Durchgangsöffnung (17) des inneren Schutzrohrs (11) eine strömungsverbindende Ausnehmung (20) aufweist.

5. Abgassensor nach Anspruch 1, **dadurch gekennzeichnet, dass** die Ausnehmung (20) durch eine Erweiterung des Durchgangskanals (2) gebildet ist.

6. Abgassensor nach Anspruch 1, **dadurch gekennzeichnet, dass** das Sensorelement (1) an seinem abgasseitigen Ende einen sensitiven Abschnitt (1.3) aufweist, der im Bereich des Ausgangs des Durchgangskanals (2) angeordnet ist.

7. Abgassensor nach Anspruch 5, **dadurch gekennzeichnet, dass** das äußere Schutzrohr (10) zwei durchmesserverschiedene Schutzrohrabschnitte (10.1,10.2) aufweist, wobei der durchmessergrößere Schutzrohrabschnitt (10.1) eine Länge L1 und der durchmesserkleinere Schutzrohrabschnitt eine Länge L2 aufweist, wobei das Verhältnis von L1 zu L2 zwischen 1,2 und 2 liegt.

## Claims

1. Exhaust gas sensor having a sensor element (1) which is mounted in a passage channel (2) of a first housing section (3), projects out of the passage channel (2) with a section (1.1) on the exhaust gas side and, on this section (1.1) on the exhaust gas side of the sensor element (1), is surrounded by an outer protective tube (10) and an inner protective tube (11), an annular gap (15) being formed between the outer protective tube (10) and the inner protective tube (11), and the inner protective tube (11) having a shoulder (12), the first housing section (3) on the outlet on the exhaust gas side of the passage channel (2) having an annular ledge (8), on which the shoulder (12) of the inner protective tube (11) bears on the end and on the circumference, so that it engages around the annular ledge (8), and the outer protective tube (10) bearing on an annular collar (18) of the shoulder (12) of the inner protective tube (11), so that the annular collar (18) of the shoulder (12) bears on the inner circumference of the outer protective tube (10), **characterized in that** the shoulder (12) has at least one passage opening (17), and the annular gap (15) opens into the outlet on the exhaust gas side of the passage channel (2) via the at least one passage opening (17) in the shoulder (12) of the inner protective tube (11).

2. Exhaust gas sensor according to Claim 1, **characterized in that** a holder (23) for the sensor element (1) is provided in the passage channel (2) and is supported on a holding shoulder (27) of the passage channel (2), wherein the annular gap (15) in the passage channel (2) opens in the region between the holding shoulder (27) and the end on the exhaust gas side of the passage channel (2).

3. Exhaust gas sensor according to Claim 2, **characterized in that** the holder (23) is formed by two mouldings (25, 26) and a powder packing (24) provided between the mouldings (25, 26).

4. Exhaust gas sensor according to Claim 1, **characterized in that** the passage channel (2) has a flow-connecting recess (20) in the region of the passage opening (17) in the inner protective tube (11) .

5. Exhaust gas sensor according to Claim 1, **characterized in that** the recess (20) is formed by a widening of the passage channel (2).

6. Exhaust gas sensor according to Claim 1, **characterized in that** the sensor element (1) has, on its end on the exhaust gas side, a sensitive section (1.3) which is arranged in the region of the outlet of the passage channel (2).

7. Exhaust gas sensor according to Claim 5, **characterized in that** the outer protective tube (10) has two protective tube sections (10.1, 10.2) of different diameters, wherein the protective tube section (10.1) of greater diameter has a length L1 and the protective tube section of smaller diameter has a length L2, wherein the ratio of L1 to L2 is between 1.2 and 2.

## Revendications

1. Capteur de gaz d'échappement avec un élément de capteur (1), qui est monté dans un canal de passage (2) d'une première partie de boîtier (3), qui fait saillie hors du canal de passage (2) avec une partie côté gaz d'échappement (1.1) et qui est entouré à cette partie côté gaz d'échappement (1.1) de l'élément de capteur (1) par un tube de protection extérieur (10) et un tube de protection intérieur (11), dans lequel une fente annulaire (15) est formée entre le tube de protection extérieur (10) et le tube de protection intérieur (11) et dans lequel le tube de protection intérieur (11) présente un épaulement (12), dans lequel la première partie de boîtier (3) présente à la sortie côté gaz d'échappement du canal de passage (2) un retrait annulaire (8), sur lequel l'épaulement (12) du tube de protection intérieur (11) est appliqué frontalement et en périphérie, de telle manière qu'il encadre le retrait annulaire (8) et dans lequel le tube de protection extérieur (10) est appliqué sur un rebord annulaire (18) de l'épaulement (12) du tube de protection intérieur (11), de telle manière que le rebord annulaire (18) de l'épaulement (12) soit appliqué sur la périphérie intérieure du tube de protection extérieur (10), **caractérisé en ce que** l'épaulement (12) présente au moins un orifice de passage (17) et la fente annulaire (15) débouche par ledit au moins un orifice de passage (17) dans l'épaulement (12) du tube de protection intérieur (11) dans la sortie côté gaz d'échappement du canal de passage (2).

2. Capteur de gaz d'échappement selon la revendication 1, **caractérisé en ce qu'**il est prévu dans le canal de passage (2) un support (23) pour l'élément de capteur (1), qui est appuyé sur un épaulement de retenue (27) du canal de passage (2), dans lequel la fente annulaire (15) débouche dans le canal de passage (2) dans la région comprise entre l'épaulement de retenue (27) et l'extrémité côté gaz d'échappement du canal de passage (2) .

3. Capteur de gaz d'échappement selon la revendication 2, **caractérisé en ce que** le support (23) est formé par deux corps moulés (25, 26) et une garniture de poudre (24) prévue entre les corps moulés (25, 26).

4. Capteur de gaz d'échappement selon la revendication 1, **caractérisé en ce que** le canal de passage (2) présente dans la région de l'orifice de passage (17) du tube de protection intérieur (11) un évidement en relation d'écoulement (20).

5. Capteur de gaz d'échappement selon la revendication 1, **caractérisé en ce que** l'évidement (20) est formé par un élargissement du canal de passage (2).

6. Capteur de gaz d'échappement selon la revendication 1, **caractérisé en ce que** l'élément de capteur (1) présente à son extrémité côté gaz d'échappement une partie sensible (1.3), qui est disposée dans la région de la sortie du canal de passage (2).

7. Capteur de gaz d'échappement selon la revendication 5, **caractérisé en ce que** le tube de protection extérieur (10) présente deux parties de tube de protection (10.1, 10.2) de diamètre différent, dans lequel la partie de tube de protection de plus grand diamètre (10.1) présente une longueur L1 et la partie de tube de protection de plus petit diamètre (10.2) présente une longueur L2, dans lequel le rapport de L1 à L2 se situe entre 1,2 et 2.
